# FASCICULE DE BREVET EUROPEEN

(11) **EP 3 077 747 B1**
(45) Date de publication et mention de la délivrance du brevet: **30.12.2020**
(21) Numéro de dépôt: 14806020.5
(22) Date de dépôt: 06.11.2014
(51) Int. Cl.: F04D 17/10, F25J 1/02, F25J 1/00, F25B 1/10, F25B 1/047, F25B 31/00, F04D 25/16, F16H 57/04

(54) **DISPOSITIF ET PROCÉDÉ DE REFROIDISSEMENT ET/OU DE LIQUÉFACTION À BASSE TEMPÉRATURE**
VORRICHTUNG UND VERFAHREN ZUR KÜHLUNG UND/ODER NIEDRIGTEMPERATURVERFLÜSSIGUNG
DEVICE AND METHOD FOR COOLING AND/OR LOW-TEMPERATURE LIQUEFACTION

(30) Priorité: 06.12.2013 FR 1362233
(43) Date de publication de la demande: 12.10.2016
(73) Titulaire: L'Air Liquide Société Anonyme pour l'Etude et l'Exploitation des Procédés Georges Claude, 75007 Paris (FR)
(72) Inventeur: BERNHARDT, Jean-Marc, F-38500 La Buisse (FR); DURAND, Fabien, F-38340 Voreppe (FR)
(74) Mandataire: Air Liquide
(86) Numéro de dépôt international: PCT/FR2014/052838
(87) Numéro de publication internationale: WO 2015/082789

(56) Documents cités:
- EP-A1- 0 411 294
- WO-A1-96/15392
- FR-A1- 2 953 913
- GB-A- 689 615

## Description

La présente invention concerne un dispositif et un procédé de refroidissement/liquéfaction à basse température.

L'invention concerne un procédé et un dispositif de liquéfaction et un procédé et un dispositif de réfrigération fonctionnant à l'hélium.

L'invention concerne un dispositif de refroidissement et/ou de liquéfaction à basse température d'un fluide de travail comprenant de l'hélium ou constitué d'hélium pur, le dispositif comprenant un circuit de travail pourvu d'une station de compression et d'une boîte froide, la station de compression comprenant un ou plusieurs étages de compression utilisant chacun un ou plusieurs compresseurs comprenant une roue de compresseur solidaire d'un axe monté rotatif sur des paliers, l'axe de chaque compresseur étant entraîné en rotation par un arbre de sortie d'un moteur via un mécanisme d'engrenage logé dans un carter mécanique comprenant de l'huile de lubrification.

Les réfrigérateurs ou liquéfacteur fonctionnant à basse température (par exemple inférieure à 80K notamment entre 80K et 4K) utilisent classiquement un fluide de travail (par exemple de l'hélium ou un mélange contenant de l'hélium) soumis à un cycle de travail comprenant une compression, éventuellement une détente, un refroidissement, un réchauffage. Ces appareils nécessitent en général plusieurs étages de compression du gaz de travail. Chaque étage de compression utilise une ou plusieurs roues de compresseur. Par exemple, ces dispositifs utilisent des compresseurs du type centrifuge.

Les stations de compression d'hélium (ou de mélange contenant de l'hélium) nécessitent un nombre important d'étages de compression pour compenser le faible taux de compression de chaque étage (cf. par exemple FR2919716A1).

En particulier, chaque arbre de compresseur doit également tourner à une vitesse relativement élevée afin de garantir une bonne efficacité de compression.

L'efficacité globale d'un compresseur multi-étagé est dépendante de plusieurs critères, notamment :
- l'efficacité des roues de compression et des volutes (pour augmenter le taux de compression),
- l'efficacité du refroidissement inter-étages (pour limiter la perte de charge du système),
- les pertes mécaniques (notamment par frottement entre les pièces mobiles).

Les fuites de gaz de travail dans la station de compression au niveau de l'interface entre les parties tournantes et les parties fixes sont inévitables. En particulier lorsque le gaz de travail est de l'hélium, on constate des fuites de gaz relativement importantes au niveau des paliers qui sustentent les arbres des roues des compresseurs. Pour limiter cette perte de gaz de travail relativement coûteux, il est connu de limiter la fuite au niveau de chaque palier de chaque étage de compression via des organes tels que des garnitures formant des labyrinthes pour gaz, des garnitures à huile, des garnitures à anneau flottant, des garnitures à gaz...

Outre le fait que ces dispositifs augmentent le coût de l'installation, ces systèmes connus ne sont pas toujours adaptés à la technologie des refroidisseurs/liquéfacteurs.

De plus, l'huile présente dans le mécanisme de la station de compression ne doit pas polluer le gaz de travail (par mélange avec l'hélium ou par apport d'humidité et/ou d'hydrocarbures légers). En effet, ces impuretés introduites dans le circuit de travail risquent de créer des bouchons aux températures cryogéniques et de casser les équipements.

Ainsi, de tels dispositifs peuvent comporter facultativement des systèmes de récupérations d'éventuelles fuites d'hélium comme décrit par exemple dans le document FR2953913A1. Selon ce document, un gaz de barrage peut être injecté pour recueillir les fuites d'hélium. En fait, le document FR 2 953 913 A1 dévoile un dispositif selon le préambule de la revendication 1 et un procédé selon le préambule de la revendication 9.

L'étanchéité d'un compresseur centrifuge hélium utilise donc la technologie consistant à isoler les parties contenant l'huile de lubrification via un gaz de barrage (azote). Un barrage à l'hélium gazeux est prévu pour éviter toute fuite d'azote vers le gaz de travail (hélium).

Cette technologie présente des avantages mais est source de coût important car ce système d'étanchéité doit être installé sur chaque étages du compresseur.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est précisément défini par la revendication 1.

Ainsi, le volume interne du carter mécanique contient une atmosphère gazeuse constituée d'un mélange gazeux ayant une masse molaire moyenne inférieure à la masse molaire de l'air. De plus, l'atmosphère gazeuse de l'intérieur du carter mécanique comprend une proportion d'hélium en mole supérieure à la proportion d'hélium dans l'air (en mole). En outre, le dispositif comprend un organe d'injection d'un gaz de barrage contenant de l'hélium au niveau d'au moins un palier du ou des compresseurs pour former un barrage gazeux guidant les fuites de fluide de travail provenant du circuit de travail vers une zone de collecte, au moins une partie de la zone de collecte comprend le carter mécanique, c'est-à-dire que le gaz de barrage contenant l'hélium de fuite récupéré alimente le volume interne du carter mécanique. Le dispositif comprend un organe de purification de l'atmosphère interne du carter moteur relié audit carter moteur via une première conduite de prélèvement d'un mélange de gaz et d'huile du carter et une seconde conduite de retour d'huile purifiée, l'organe de purification comprenant une sortie de récupération de gaz de travail récupéré lors de la purification

Par ailleurs, des modes de réalisation de l'invention peuvent comporter l'une ou plusieurs des caractéristiques suivantes :
- l'atmosphère gazeuse de l'intérieur du carter mécanique comprend une proportion d'hélium en mole comprise entre 5% et 100%,
- l'atmosphère gazeuse de l'intérieur du carter mécanique comprend une proportion molaire majoritaire de l'hélium,
- l'atmosphère gazeuse de l'intérieur du carter mécanique comprend de l'hélium et l'un au moins des gaz parmi : de l'azote, de l'argon, un ou des composés du fluide de travail,
- le dispositif comprend un organe de compression du mélange prélevé par la conduite de prélèvement pour fourni à l'organe de purification un mélange comprimé à une pression déterminée,
- l'organe de compression du mélange de gaz et d'huile de l'atmosphère interne du carter comprend un mécanisme lubrifié à huile dont l'huile est identique ou de même nature que l'huile de lubrification du carter mécanique, l'organe de purification étant commun pour purifier l'huile de lubrification du carter mécanique et l'huile de l'organe de compression du mélange prélevé par la conduite de prélèvement,
- au moins une partie des compresseurs de la station de compression sont des compresseurs du type centrifuges,
- le gaz de barrage comprend au moins l'un parmi : de l'azote, un ou des composés du fluide de travail,
- le carter mécanique est étanche,
- l'organe de compression du mélange de gaz et d'huile de l'atmosphère interne du carter comprend un compresseur du type à vis lubrifiée,
- le circuit de travail soumet le gaz de travail à un cycle comprenant en série : une compression du fluide de travail dans la station de compression, un refroidissement et éventuellement une détente du fluide de travail dans la boîte froide et un réchauffement du fluide de travail en vue de son retour vers la station de compression,

L'invention concerne également un procédé de refroidissement et/ou de liquéfaction à basse température d'un fluide de travail, notamment un fluide de travail comprenant de l'hélium ou constitué d'hélium pur au moyen d'un réfrigérateur/liquéfacteur comprenant un circuit de travail pourvu d'une station de compression et d'une boîte froide, le réfrigérateur/liquéfacteur soumettant le gaz de travail dans le circuit de travail à un cycle comprenant en série: une compression du fluide de travail dans la station de compression, un refroidissement dans la boîte froide et un réchauffement du fluide de travail en vue de son retour vers la station de compression, la station de compression comprenant un ou plusieurs étages de compression utilisant chacun un ou plusieurs compresseurs comprenant une roue de compresseur solidaire d'un axe monté rotatif sur des paliers, l'axe de chaque compresseur étant entraîné en rotation par un arbre de sortie d'un moteur via un mécanisme d'engrenage logé dans un carter mécanique comprenant de l'huile de lubrification, l'atmosphère gazeuse à l'intérieur du volume interne du carter mécanique étant contrôlée pour contenir un mélange gazeux ayant une masse molaire moyenne inférieure à la masse molaire de l'air et précisément tel que défini par la revendication 9.

Selon l'invention le procédé comprend une étape d'injection d'un gaz de barrage au niveau d'au moins un palier du ou des compresseurs pour former un barrage gazeux guidant les fuites de fluide de travail provenant du circuit de travail vers une zone de collecte, le volume interne du carter étant alimenté en mélange de gaz de barrage et d'hélium de fuite collecté.

Le procédé selon l'invention comprend aussi une étape de purification de l'atmosphère interne du carter pour séparer le gaz de travail et l'huile et réinjecter l'huile purifiée dans le carter mécanique.

Selon d'autres particularités possibles:
- le procédé comprend une étape de compression du mélange de gaz et d'huile de l'atmosphère avant l'étape de purification,
- l'étape de compression du mélange de gaz et d'huile de l'atmosphère interne du carter utilise un mécanisme lubrifié à huile dont l'huile est identique ou de même nature que l'huile de lubrification du carter mécanique, l'étape de purification de l'atmosphère interne du carter mécanique étant commune à une étape de purification de l'huile de l'organe de compression du mélange en amont d'étape de purification.

L'invention peut concerner également tout dispositif ou procédé alternatif dans le cadre de l'invention telle que définie dans les revendications annexées.

D'autres particularités et avantages apparaîtront à la lecture de la description ci-après, faite en référence aux figures dans lesquelles :
- la figure 1 représente une vue schématique et partielle illustrant la structure et le fonctionnement d'un exemple de réalisation d'un dispositif de réfrigération et/ou de liquéfaction selon l'invention,
- la figure 2 représente une vue en coupe longitudinale, schématique et partielle, illustrant un exemple de roue de compresseur montée sur paliers comprenant un mécanisme d'entraînement selon l'invention,
- la figure 3 représente une vue de face, schématique et partielle, d'une extrémité du mécanisme illustrant l'entraînement par le moteur d'une pluralité d'axes de compresseurs,
- la figure 4 représente une vue schématique et partielle illustrant la structure et le fonctionnement d'un détail d'un autre exemple de réalisation d'un dispositif de réfrigération et/ou de liquéfaction selon l'invention illustrant une purification de gaz du dispositif contenant de l'huile de lubrification.

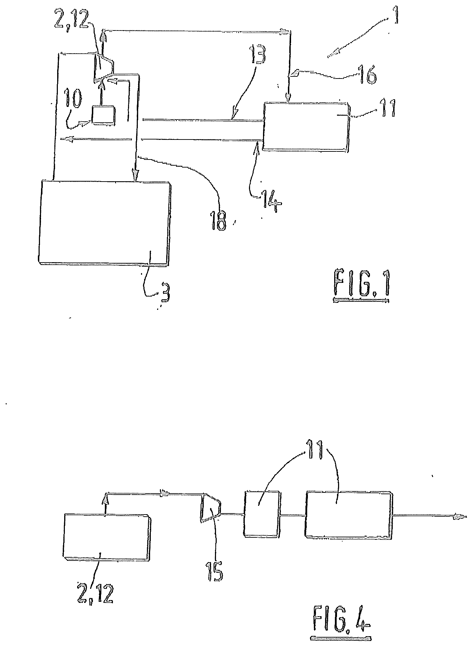

Le dispositif de refroidissement et/ou de liquéfaction représenté partiellement et schématiquement à la figure 1 opère à des températures cryogéniques, par exemple comprises entre 4K et 80K. Ce dispositif contient un gaz de travail comprenant de l'hélium ou constitué d'hélium pur. Le dispositif 1 comprend classiquement un circuit de travail pourvu d'une station 2 de compression et d'une boîte 3 froide.

Le circuit 18 de travail soumet le gaz de travail à un cycle comprenant en série : une compression du fluide de travail dans la station 2 de compression, un refroidissement (et éventuellement une détente) du fluide de travail dans la boîte froide 3 et un réchauffement du fluide de travail en vue de son retour vers la station 2 de compression.

La station 2 de compression comprend un ou plusieurs étages de compression utilisant chacun un ou plusieurs compresseurs 12.

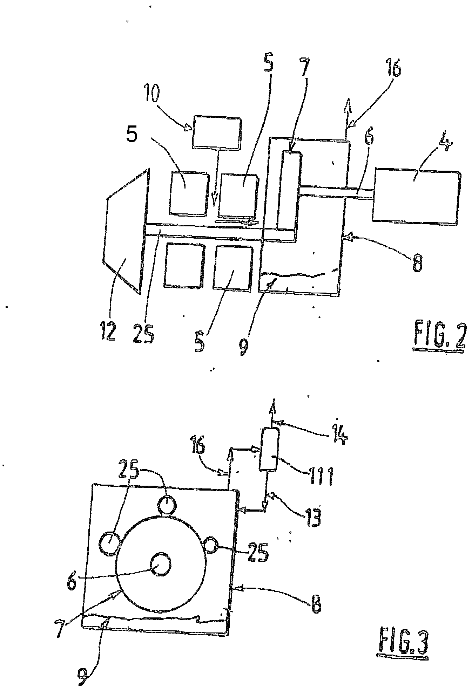

Comme illustré schématiquement à la figure 2, chaque roue 12 de compresseur est solidaire d'un axe 25 monté rotatif sur des paliers 5. Un joint d'étanchéité est placé notamment à une extrémité de l'axe 25.

L'axe 25 de chaque compresseur 12 est classiquement entraîné en rotation par un arbre 6 de sortie d'un moteur 4 via un mécanisme 7 d'engrange(s) (notamment un système multiplicateur de vitesse) logé dans un carter 8 mécanique.

Comme visible à la figure 3, l'arbre 6 de sortie du moteur peut entraîner plusieurs axes 25 de compresseurs 12 via au moins une roue 7.

Le carter 8 mécanique est clos et contient une atmosphère huileuse et par exemple un bain d'huile 9 de lubrification mise en mouvement par les pièces mécaniques mobiles.

Le volume interne du carter 8 mécanique contient une atmosphère gazeuse constituée d'un mélange gazeux ayant une masse molaire moyenne inférieure à la masse molaire de l'air. C'est-à-dire que, au lieu de prévoir une atmosphère d'air ou d'azote dans ce carter 8, on prévoit que l'atmosphère interne de gaz a une masse molaire plus basse que l'air ou l'azote. Par exemple, l'intérieur du carter contient une proportion d'hélium déterminée.

L'ambiance gazeuse dans le carter 8 mécanique contient de l'hélium et éventuellement l'un au moins des gaz parmi : de l'azote, de l'argon, un ou des composés du fluide de travail. L'atmosphère gazeuse de l'intérieur du carter 8 mécanique comprend une proportion d'hélium en mol supérieur à la proportion d'hélium dans l'air. De préférence, l'atmosphère gazeuse de l'intérieur du carter 8 mécanique comprend une proportion molaire majoritaire de l'hélium éventuellement complété par l'un au moins parmi : de l'azote, de l'argon, de l'air, un ou des composés du fluide de travail.

Cette atmosphère gazeuse permet de réduire fortement la contribution des pertes mécaniques du compresseur et ainsi améliorer le rendement du dispositif. En effet, les frottements des pièces en mouvement (axes, engrenages, trains, ...) sont réduits dans une atmosphère de gaz à masse molaire relativement plus faible. Cette réduction des frottements est d'autant plus grande que la vitesse de déplacement des pièces mécaniques mobiles est plus grande.

Une source de gaz à faible masse molaire peut être prévue pour maintenir cette atmosphère au sein du carter 8. Un ou des capteurs peuvent être prévus pour contrôler cette atmosphère et réguler sa composition le cas échéant.

De préférence, le carter 8 mécanique est donc étanche.

Comme illustré aux figures 1 et 2, le dispositif 1 comprend un organe 10 d'injection d'un gaz de barrage au niveau d'au moins un palier 5 du ou des compresseurs 12 pour former un barrage gazeux guidant les fuites de fluide de travail provenant du circuit de travail vers une zone de collecte.

Le mélange de gaz de barrage et de gaz de travail récupéré peut être utilisé pour alimenter l'intérieur du carter 8 mécanique (pour former l'atmosphère à faible masse molaire).

En effet, dans ce cas, si l'hélium est déjà présent dans le gaz de travail, il est avantageux d'utiliser ce même gaz hélium comme gaz de barrage et/ou de laisser « fuir » l'hélium ou le gaz de travail vers l'intérieur du carter 8 (comme illustré schématiquement par des flèches à la figure 2).

En revanche, les autres systèmes d'étanchéités sur l'axe 25 peuvent être plus simples que les solutions proposées dans l'art antérieur. Le coût de fabrication global du compresseur pourra être ainsi réduit.

De préférence, l'hélium ainsi envoyé dans le carter 8 mécanique doit être récupéré car sa perte réduit l'intérêt économique de la solution.

Pour cela, de préférence cet hélium transféré dans le carter 8 mécanique est récupéré et traité. Ainsi, un premier système de séparation d'huile peut être installé pour limiter la quantité d'huile qui sortira du carter 8 du compresseur 12. L'hélium récupéré peut contenir des impuretés d'air si le carter 8 mécanique n'est pas parfaitement étanche vis-à-vis de l'extérieur.

Il est ainsi nécessaire de rendre le carter 8 mécanique (contenant notamment le mécanisme multiplicateur de vitesse) le plus étanche possible vis-à-vis de l'atmosphère extérieure afin d'éviter de perdre trop d'hélium vers l'extérieur.

Comme illustré schématiquement à la figure 1, il donc également préférable de prévoir un système de purification 11 de l'hélium récupéré (ligne 16) pour séparer l'huile résiduelle et également épurer cet hélium des autres polluants (par exemple : air, eau, ...) afin de pouvoir le récupérer et éventuellement réinjecter (ligne 14) cet hélium dans le cycle de travail.

Habituellement, l'huile 9 de ce carter mécanique est également gérée par un système externe à celle-ci avec un réservoir, une pompe et des vannes d'injections et de régulation.

Le circuit d'huile en contact avec l'hélium devra également limiter les pertes d'hélium vers l'extérieur.

Le système 11 de purification contiendra de préférence un élément classique du type filtration mécanique, coalesceur et/ou adsorption permettant de retirer les gouttelettes et vapeurs d'huiles présentes dans l'hélium.

Comme illustré à l'exemple de la figure 3, le dispositif comprend une première conduite 16 de prélèvement récupère du mélange de gaz et d'huile du carter 8 vers un organe 111 de purification. L'organe de purification 111 de la figure 3 peut comprendre ou être constitué d'un « coalesceur » permettant de limiter la quantité d'huile qui sort sous forme liquide du carter avec retour direct par une ligne 13. Une autre sortie 14 de l'organe 111 de purification peut comprendre un flux qui doit encore être traité pour les vapeurs et/ou d'autres impuretés.

Si cet organe 111 assure toute la purification, l'huile purifiée peut être renvoyée dans le carter 8 mécanique via une seconde conduite 13 de retour. L'hélium récupéré lors de la purification est renvoyée, par exemple dans le circuit de travail.

Comme illustré à la figure 4, il peut être nécessaire de comprimer cet hélium mélangé à de l'huile récupéré par la conduite 16 de prélèvement avant le traitement (purification). Un compresseur 15 de récupération peut être prévu à cet effet en amont de l'organe 11 de purification.

Selon une particularité avantageuse, si ce compresseur 15 de récupération est du type à huile, la même huile (ou une huile chimiquement compatible) est utilisée pour les carters 8 mécaniques des compresseur 12 de la station 2 de compression et pour le compresseur 15 de récupération. Si ce compresseur 15 de récupération est un compresseur à vis lubrifié, une huile déterminée est nécessaire pour permettre une meilleure séparation finale de l'huile et de l'hélium. Par exemple, une huile du type synthétique à faible pression de vapeur saturante peut être utilisée.

L'organe 11 de purification peut ainsi être commun aux deux systèmes de compression (compresseurs 12 de la station 2 et compresseur 15 de récupération).

Ceci permet de standardiser et diminuer le coût d'ensemble du dispositif.

Le dispositif et le procédé permettent ainsi de simplification la structure des paliers 5. Le coût du dispositif 1 et de son fonctionnement sont réduits. La performance du mécanisme d'entraînement des compresseurs dans le carter 8 mécanique est notamment améliorée.

## Revendications

1. Dispositif de refroidissement et/ou de liquéfaction à basse température d'un fluide de travail comprenant de l'hélium ou constitué d'hélium pur, le dispositif (1) comprenant un circuit de travail pourvu d'une station (2) de compression comprenant un moteur (4) et d'une boîte (3) froide, la station (2) de compression comprenant un ou plusieurs étages de compression utilisant chacun un ou plusieurs compresseurs comprenant une roue (12) de compresseur solidaire d'un axe (25) monté rotatif sur des paliers (5), l'axe (25) de chaque compresseur (12) étant entraîné en rotation par un arbre (6) de sortie du moteur (4) via un mécanisme (7) d'engrenage logé dans un carter (8) mécanique faisant partie du dispositif (1) de refroidissement et/ou de liquéfaction et comprenant de l'huile (9) de lubrification, le volume interne du carter (8) mécanique contenant une atmosphère gazeuse constituée d'un mélange gazeux ayant une masse molaire moyenne inférieure à la masse molaire de l'air, le dispositif (1) de refroidissement et/ou de liquéfaction comprenant un organe (10) d'injection d'un gaz de barrage au niveau d'au moins un palier (5) du ou des compresseurs (12) pour former un barrage gazeux guidant les fuites de fluide de travail provenant du circuit de travail vers une zone de collecte, l'atmosphère gazeuse de l'intérieur du carter (8) mécanique comprenant une proportion d'hélium en mole supérieure à la proportion d'hélium dans l'air en mole, **caractérisé en ce que** la roue (12), les paliers (5), l'organe (10) d'injection d'un gaz de barrage et le moteur (4) sont situés à l'extérieur du carter (8) mécanique et **en ce qu'**au moins une partie de la zone de collecte comprend le carter (8) mécanique, c'est-à-dire que le gaz de barrage contenant l'hélium de fuite récupéré alimente le volume interne du carter (8) mécanique, et **en ce qu'**il comprend un organe (11/111) de purification de l'atmosphère interne du carter (8) mécanique relié audit carter (8) mécanique via une première conduite (16) de prélèvement d'un mélange de gaz et d'huile du carter (8) mécanique et une seconde conduite (13) de retour d'huile purifiée, l'organe (11/111) de purification comprenant une sortie (14) de récupération de gaz de travail récupéré lors de la purification, le gaz de barrage comprenant de l'hélium.

2. Dispositif selon la revendication 1, **caractérisé en ce que** l'atmosphère gazeuse de l'intérieur du carter (8) mécanique comprend une proportion d'hélium en mole comprise entre 5% et 100%.

3. Dispositif selon l'une quelconque des revendications 1 à 2, **caractérisé en ce que** l'atmosphère gazeuse de l'intérieur du carter (8) mécanique comprend une proportion molaire majoritaire de l'hélium.

4. Dispositif selon l'une quelconque des revendications 1 à 3, **caractérisé en ce que** l'atmosphère gazeuse de l'intérieur du carter (8) mécanique comprend de l'hélium et l'un au moins des gaz parmi : de l'azote, de l'argon, un ou des composés du fluide de travail.

5. Dispositif selon l'une quelconque des revendications 1 à 4, **caractérisé en ce qu'**il comprend un organe (15) de compression du mélange prélevé par la conduite (16) de prélèvement pour fournir à l'organe (11/111) de purification un mélange comprimé à une pression déterminée.

6. Dispositif selon la revendication 5, **caractérisé en ce que** l'organe (15) de compression du mélange de gaz et d'huile de l'atmosphère interne du carter comprend un mécanisme lubrifié à huile dont l'huile est identique ou de même nature que l'huile (9) de lubrification du carter (8) mécanique et **en ce que** l'organe (11/111) de purification est commun pour purifier l'huile (9) de lubrification du carter (8) mécanique et l'huile de l'organe (15) de compression du mélange prélevé par la conduite (16) de prélèvement.

7. Dispositif selon l'une quelconque des revendications 1 à 6, **caractérisé en ce qu'**au moins une partie des compresseurs de la station (2) de compression sont des compresseurs du type centrifuges.

8. Dispositif selon l'une quelconque des revendications 1 à 7, **caractérisé en ce que** le gaz de barrage comprend au moins l'un parmi : de l'azote, un ou des composés du fluide de travail.

9. Procédé de refroidissement et/ou de liquéfaction à basse température d'un fluide de travail comprenant de l'hélium ou constitué d'hélium pur au moyen d'un dispositif (1) réfrigérateur/liquéfacteur comprenant un circuit de travail pourvu d'une station (2) de compression comprenant un moteur (4) et d'une boîte (3) froide, le dispositif réfrigérateur/liquéfacteur soumettant le gaz de travail dans le circuit de travail à un cycle comprenant en série: une compression du fluide de travail dans la station (2) de compression, un refroidissement dans la boîte froide (3) et un réchauffement du fluide de travail en vue de son retour vers la station (2) de compression, la station (2) de compression comprenant un ou plusieurs étages de compression utilisant chacun un ou plusieurs compresseurs comprenant une roue (12) de compresseur solidaire d'un axe (25) monté rotatif sur des paliers (5), l'axe (25) de chaque compresseur (12) étant entraîné en rotation par un arbre (6) de sortie du moteur (4) via un mécanisme (7) d'engrenage logé dans un carter (8) mécanique faisant partie du dispositif (1) réfrigérateur/liquéfacteur et comprenant de l'huile (9) de lubrification, l'atmosphère gazeuse à l'intérieur du volume interne du carter (8) mécanique étant contrôlée pour contenir un mélange gazeux ayant une masse molaire moyenne inférieure à la masse molaire de l'air, l'atmosphère gazeuse de l'intérieur du carter (8) mécanique comprenant une proportion d'hélium en mole supérieure à la proportion d'hélium dans l'air en mole le dispositif (1) réfrigérateur/liquéfacteur comprenant un organe (10) d'injection d'un gaz de barrage au niveau d'au moins un palier (5) du ou des compresseurs (12) pour former un barrage gazeux guidant les fuites de fluide de travail provenant du circuit de travail vers une zone de collecte du dispositif (1) réfrigérateur/liquéfacteur, **caractérisé en ce que** la roue (12), les paliers (5), l'organe (10) d'injection d'un gaz de barrage et le moteur (4) sont situés à l'extérieur du carter (8) mécanique et **en ce qu'**au moins une partie de la zone de collecte comprend le carter (8) mécanique, c'est-à-dire que le gaz de barrage contenant l'hélium de fuite récupéré alimente le volume interne du carter (8) mécanique, le dispositif (1) réfrigérateur/liquéfacteur comprenant un organe (11/111) de purification de l'atmosphère interne du carter (8) mécanique relié audit carter (8) mécanique via une première conduite (16) de prélèvement d'un mélange de gaz et d'huile du carter (8) et une seconde conduite (13) de retour d'huile purifiée, l'organe (11/111) de purification comprenant une sortie (14) de récupération de gaz de travail récupéré lors de la purification, le gaz de barrage comprenant de l'hélium, et le procédé comprenant:
- une étape d'injection du gaz de barrage au niveau d'au moins un palier (5) du ou des compresseurs (12) pour former le barrage gazeux guidant les fuites de fluide de travail provenant du circuit de travail vers la zone de collecte et **en ce que** le volume interne du carter (8) mécanique est alimenté en mélange de gaz de barrage et d'hélium de fuite collecté, et
- une étape de purification de l'atmosphère interne du carter mécanique pour séparer le gaz de travail et l'huile et réinjecter l'huile purifiée dans le carter (8) mécanique.

10. Procédé selon la revendication 9 **caractérisé en ce qu'**il comprend une étape de compression du mélange de gaz et d'huile de l'atmosphère avant l'étape de purification.

## Patentansprüche

1. Kühl- und/oder Niedrigtemperaturverflüssigungsvorrichtung eines Arbeitsfluids, das Helium umfasst oder aus reinem Helium besteht, wobei die Vorrichtung (1) einen Arbeitskreislauf umfasst, der mit einer Verdichtungsstation (2) versehen ist, die einen Motor (4) und eine Coldbox (3) umfasst, wobei die Verdichtungsstation (2) eine oder mehrere Verdichtungsstufen umfasst, die jeweils einen oder mehrere Kompressoren verwenden, die ein Kompressorrad (12) umfassen, das fest mit einer Achse (25) verbunden ist, die drehbar auf Lagern (5) angebracht ist, wobei die Achse (25) jedes Kompressors (12) von einer Ausgangswelle (6) des Motors (4) über einen Getriebemechanismus (7) in Drehung versetzt wird, der in einem mechanischen Gehäuse (8) untergebracht ist, das einen Teil der Kühl- und/oder Verflüssigungsvorrichtung (1) bildet und Schmieröl (9) umfasst, wobei das Innenvolumen des mechanischen Gehäuses (8) eine gasförmige Atmosphäre enthält, die aus einem Gasgemisch mit einer mittleren Molmasse besteht, die kleiner ist als die Molmasse der Luft, wobei die Kühl- und/oder Verflüssigungsvorrichtung (1) ein Sperrgaseinspritzorgan (10) an mindestens einem Lager (5) des oder der Kompressoren (12) umfasst, um eine gasförmige Sperre zu bilden, welche die Leckagen von Arbeitsfluid aus dem Arbeitskreislauf zu einer Sammelzone leitet, wobei die gasförmige Atmosphäre des Inneren des mechanischen Gehäuses (8) einen molaren Heliumanteil umfasst, der größer ist als der molare Heliumanteil in der Luft,
**dadurch gekennzeichnet, dass** das Rad (12), die Lager (5), das Sperrgaseinspritzorgan (10) und der Motor (4) außerhalb des mechanischen Gehäuses (8) angeordnet sind, und dass zumindest ein Teil der Sammelzone das mechanische Gehäuse (8) umfasst, das heißt, das Sperrgas, welches das rückgewonnene Leckhelium enthält, wird in das Innenvolumen des mechanischen Gehäuses (8) eingespeist, und dass sie ein Reinigungsorgan (11/111) der Innenatmosphäre des mechanischen Gehäuses (8) umfasst, das mit dem mechanischen Gehäuse (8) über eine erste Leitung (16) zur Entnahme eines Gas-Öl-Gemisches aus dem mechanischen Gehäuse (8) und eine zweite Leitung (13) zur Rückführung des gereinigten Öls verbunden ist, wobei das Reinigungsorgan (11/111) einen Ausgang (14) zur Rückgewinnung von bei der Reinigung zurückgewonnenem Arbeitsgas umfasst, wobei das Sperrgas Helium umfasst.

2. Vorrichtung nach Anspruch 1, **dadurch gekennzeichnet, dass** die gasförmige Atmosphäre des Inneren des mechanischen Gehäuses (8) einen molaren Heliumanteil zwischen 5% und 100% aufweist.

3. Vorrichtung nach einem der Ansprüche 1 bis 2, **dadurch gekennzeichnet, dass** die gasförmige Atmosphäre des Inneren des mechanischen Gehäuses (8) einen mehrheitlich molaren Heliumanteil umfasst.

4. Vorrichtung nach einem der Ansprüche 1 bis 3, **dadurch gekennzeichnet, dass** die gasförmige Atmosphäre des Inneren des mechanischen Gehäuses (8) Helium und mindestens eines unter den folgenden Gasen umfasst: Stickstoff, Argon, eine Verbindung oder Verbindungen des Arbeitsfluids.

5. Vorrichtung nach einem der Ansprüche 1 bis 4, **dadurch gekennzeichnet, dass** sie ein Verdichtungsorgan (15) des von der Entnahmeleitung (16) entnommenen Gemisches umfasst, um das Reinigungsorgan (11/111) mit einem auf einen bestimmten Druck verdichteten Gemisch zu versorgen.

6. Vorrichtung nach Anspruch 5, **dadurch gekennzeichnet, dass** das Verdichtungsorgan (15) des Gas-Öl-Gemischs der Innenatmosphäre des Gehäuses einen ölgeschmierten Mechanismus umfasst, dessen Öl mit dem Schmieröl (9) des mechanischen Gehäuses (8) identisch oder von gleicher Art ist, und dass das Reinigungsorgan (11/111) gemeinsam dazu dient, das Schmieröl (9) des mechanischen Gehäuses (8) und das Öl des Verdichtungsorgans (15) des durch die Entnahmeleitung (16) entnommenen Gemisches zu reinigen.

7. Vorrichtung nach einem der Ansprüche 1 bis 6, **dadurch gekennzeichnet, dass** mindestens ein Teil der Kompressoren der Verdichtungsstation (2) Kompressoren vom Zentrifugaltyp sind.

8. Vorrichtung nach einem der Ansprüche 1 bis 7, **dadurch gekennzeichnet, dass** das Sperrgas mindestens eines unter den Folgenden umfasst: Stickstoff, eine Verbindung oder Verbindungen des Arbeitsfluids.

9. Verfahren zur Kühlung und/oder Niedrigtemperaturverflüssigung eines Arbeitsfluids, das Helium umfasst oder aus reinem Helium besteht, mittels einer Kühl-/Verflüssigungsvorrichtung (1), die einen Arbeitskreislauf umfasst, der mit einer Verdichtungsstation (2) versehen ist, die einen Motor (4) und eine Coldbox (3) umfasst, wobei die Kühl-/Verflüssigungsvorrichtung das Arbeitsgas in dem Arbeitskreislauf einem Zyklus unterzieht, der seriell Folgendes umfasst: eine Verdichtung des Arbeitsfluids in der Verdichtungsstation (2), eine Kühlung in der Coldbox (3) und eine Erwärmung des Arbeitsfluids für seine Rückführung zur Verdichtungsstation (2), wobei die Verdichtungsstation (2) eine oder mehrere Verdichtungsstufen umfasst, die jeweils einen oder mehrere Kompressoren verwenden, die ein Kompressorrad (12) umfassen, das fest mit einer Achse (25) verbunden ist, die drehbar auf Lagern (5) angebracht ist, wobei die Achse (25) jedes Verdichters (12) von einer Ausgangswelle (6) des Motors (4) über einen Getriebemechanismus (7) in Drehung versetzt wird, der in einem mechanischen Gehäuse (8) untergebracht ist, das einen Teil der Kühl-/Verflüssigungsvorrichtung (1) bildet und Schmieröl (9) umfasst, wobei die gasförmige Atmosphäre innerhalb des Innenvolumens des mechanischen Gehäuses (8) so gesteuert wird, dass sie ein Gasgemisch mit einer mittleren Molmasse enthält, die kleiner ist als die Molmasse der Luft, wobei die gasförmige Atmosphäre des Inneren des mechanischen Gehäuses (8) einen molaren Heliumanteil umfasst, der größer ist als der molare Heliumanteil in der Luft, wobei die Kühl-/Verflüssigungsvorrichtung (1) ein Sperrgaseinspritzorgan (10) an mindestens einem Lager (5) des oder der Kompressoren (12) umfasst, um eine gasförmige Sperre zu bilden, welche die Leckagen von Arbeitsfluid aus dem Arbeitskreislauf zu einer Sammelzone der Kühl-/Verflüssigungsvorrichtung (1) leitet, **dadurch gekennzeichnet, dass** das Rad (12), die Lager (5), das Sperrgaseinspritzorgan (10) und der Motor (4) außerhalb des mechanischen Gehäuses (8) angeordnet sind, und dass zumindest ein Teil der Sammelzone das mechanische Gehäuse (8) umfasst, das heißt, das Sperrgas, welches das rückgewonnene Leckhelium enthält, wird in das Innenvolumen des mechanischen Gehäuses (8) eingespeist, wobei die Kühl-/Verflüssigungsvorrichtung (1) ein Reinigungsorgan (11/111) der Innenatmosphäre des mechanischen Gehäuses (8) umfasst, das mit dem mechanischen Gehäuse (8) über eine erste Leitung (16) zur Entnahme eines Gas-Öl-Gemisches aus dem mechanischen Gehäuse (8) und eine zweite Leitung (13) zur Rückführung des gereinigten Öls verbunden ist, wobei das Reinigungsorgan (11/111) einen Ausgang (14) zur Rückgewinnung von bei der Reinigung zurückgewonnenem Arbeitsgas umfasst, wobei das Sperrgas Helium umfasst, und wobei das Verfahren Folgendes umfasst:
- einen Schritt des Einspritzens des Sperrgases an mindestens einem Lager (5) des oder der Kompressoren (12), um die gasförmige Sperre zu bilden, welche die Leckagen des Arbeitsfluids aus dem Arbeitskreislauf zur Sammelzone leitet, und dadurch, dass das Innenvolumen des mechanischen Gehäuses (8) mit einem Gemisch aus Sperrgas und gesammeltem Leckhelium versorgt wird, und
- einem Schritt zur Reinigung der Innenatmosphäre des mechanischen Gehäuses, um das Arbeitsgas und das Öl zu trennen und das gereinigte Öl wieder in das mechanische Gehäuse einzuspritzen (8).

10. Verfahren nach Anspruch 9, **dadurch gekennzeichnet, dass** es einen Schritt der Verdichtung des Gas-Öl-Gemischs in der Atmosphäre vor dem Reinigungsschritt umfasst.

## Claims

1. Low-temperature cooling and/or liquefaction device for a working fluid comprising helium or composed of pure helium, the device (1) comprising a working circuit equipped with a compression station (2) comprising a motor (4) and with a cold box (3), the compression station (2) comprising one or more compression stages, each using one or more compressors comprising a compressor wheel (12) attached to an axis (25) rotatably-mounted on bearings (5), the axis (25) of each compressor (12) being driven in rotation by an output shaft (6) of the motor (4) via an engaging mechanism (7) encased in a mechanical casing (8) that is a part of the cooling and/or liquefaction device (1) and comprising lubricating oil (9), the internal volume of the mechanical casing (8) containing a gaseous atmosphere consisting of a gaseous mixture having an average molar mass less that of the molar mass of air, the cooling and/or liquefaction device (1) comprising an injecting member (10) of a blocking gas on the level of at least one bearing (5) of the compressor(s) (12) in order to form a gaseous barrier that guides the working fluid leakage originating from the working circuit towards a collection zone, the gaseous atmosphere inside the mechanical casing (8) comprising a helium proportion in moles superior to the proportion of helium in the air in moles, **characterised in that** the wheel (12), the bearings (5), the blocking gas injecting member (10), and the motor (4) are situated outside of the mechanical casing (8) and **in that** at least one part of the collection zone comprises the mechanical casing (8), meaning that the blocking gas containing the recovered helium leakage feeds the internal volume of the mechanical casing (8), and **in that** it comprises a purifying member (11/111) for the internal atmosphere of the mechanical casing (8) linked to said mechanical casing (8) via a first sampling pipeline (16) of a mixture of gas and oil from the mechanical casing (8) and a second return pipeline (13) of purified oil, the purifying member (11/111) comprising a recuperation output (14) of the working gas recovered during the purification, the blocking gas comprising helium.

2. Device according to claim 1, **characterised in that** the gaseous atmosphere of the interior of the mechanical casing (8) comprises a proportion of helium in moles between 5% and 100%.

3. Device according to any one of claims 1 to 2, **characterised in that** the gaseous atmosphere of the interior of the mechanical casing (8) comprises a molar proportion of a majority of helium.

4. Device according to any one of claims 1 to 3, **characterised in that** the gaseous atmosphere of the interior of the mechanical casing (8) comprises helium and at least one of the following gases: Nitrogen, argon, one or some of the compounds of the working fluid.

5. Device according to any one of claims 1 to 4, **characterised in that** it comprises a compressing member (15) for the mixture sampled by the sampling pipeline (16) to furnish a mixture compressed at a determined pressure to the purifying member (11/111).

6. Device according to claim 5, **characterised in that** the compressing member (15) of the mixture of gas and oil from the internal atmosphere of the casing comprises a mechanism lubricated by oil, the oil of which is identical or of the same nature as the lubricating oil (9) of the mechanical casing (8), and **in that** the purifying member (11/111) purifies both the lubricating oil (9) of the mechanical casing (8) and the oil of the compressing member (15) of the mixture sampled by the sampling pipeline (16).

7. Device according to any one of claims 1 to 6, **characterised in that** at least one part of the compressors of the compression station (2) is a centrifugal type compressor.

8. Device according to any one of claims 1 to 7, **characterised in that** the blocking gas comprises at least one of the following: nitrogen, one or some of the compounds of the working fluid.

9. Low-temperature cooling or liquefaction method for a working fluid, comprising helium or constituted of pure helium by means of a refrigeration/liquefaction device (1) comprising a working circuit equipped with a compression station (2) comprising a motor (4) and a cold box (3), the refrigeration/liquefaction device introducing the working gas in the working circuit in a cycle comprising in a series: a compression of the working fluid in the compression station (2), cooling in the cold box (3), and a warming of the working fluid in preparation for its return toward the compression station (2), the compression station (2) comprising one or more compression stages, each using one or more compressors comprising a compressor wheel (12) attached to an axis (25) rotatably mounted on bearings (5), the axis (25) of each compressor (12) being driven in rotation by an output shaft (6) if the motor (4) via an engaging mechanism (7) encased in a mechanical casing (8) that is a part of the cooling and/or liquefaction device (1) and comprising lubricating oil (9), the gaseous atmosphere inside the internal volume of the mechanical casing (8) being controlled to contain a gaseous mixture having an average molar mass inferior to that of the molar mass of air, the gaseous atmosphere of the inside of the mechanical casing (8) comprising a helium proportion in moles superior to that of proportion of helium in moles in the air, the refrigeration/liquefaction device (1) comprising an injection member (10) of blocking gas at the level of at least one bearing (5) of the compressor(s) (12) to form a gaseous barrier guiding the working fluid leakage originating from the working circuit towards a collection zone of the refrigeration/liquefaction device (1), **characterised in that** the wheel (12), the bearings (5), the blocking gas injection member (10), and the motor (4) are situated exterior of the mechanical casing (8) and **in that** at least one part of the collection zone comprises the mechanical casing (8), meaning that the blocking gas containing the recovered helium leakage feeds the internal volume of the mechanical casing (8), the refrigeration/liquefaction device (1) comprising a purifying member (11/111) of the internal atmosphere of the mechanical casing (8) linked to said mechanical casing (8) via a first sampling pipeline (16) of the mixture of gas and oil from the casing (8) and a second return pipeline (13) of purified oil, the purifying member (11/111) comprising a recuperation output (14) of the working gas recovered during purification, the blocking gas comprising helium, and the method comprising:
- an injection step of the blocking gas at the level of at least one bearing (5) of the compressor(s) (12) in order to form the gaseous barrier guiding the working fluid leakage originating from the working circuit towards the collection zone, and **in that** the internal volume of the mechanical casing (8) is fed with a mixture of blocking gas and helium leakage collected, and
- a purification step of the internal atmosphere of the mechanical casing in order to separate the working gas and the oil, and to reinject the purified oil into the mechanical casing (8).

10. Method according to claim 9, **characterised in that** it comprises a compression step of the mixture of gas and oil from the atmosphere before the purification step.
